# EUROPEAN PATENT SPECIFICATION

(11) **EP 2 741 536 B1**
(45) Date of publication and mention of the grant of the patent: **18.10.2017**
(21) Application number: 13744383.4
(22) Date of filing: 30.01.2013
(51) Int. Cl.: H04W 24/08, H04W 16/18, H04W 24/10

(54) **MOBILE COMMUNICATION METHOD AND WIRELESS BASE STATION**
MOBILES KOMMUNIKATIONSVERFAHREN UND DRAHTLOSE BASISSTATION
PROCÉDÉ DE COMMUNICATION MOBILE ET STATION DE BASE SANS FIL

(30) Priority: 30.01.2012 JP 2012017303
(43) Date of publication of application: 11.06.2014
(73) Proprietor: NTT DOCOMO, INC., Chiyoda-ku Tokyo 100-6150 (JP)
(72) Inventor: HAPSARI, Wuri Andarmawanti, Tokyo 100-6150 (JP); AOYAGI, Kenichiro, Tokyo 100-6150 (JP); UMESH, Anil, Tokyo 100-6150 (JP); TAKAHASHI, Hideaki, Tokyo 100-6150 (JP)
(74) Representative: Hoffmann Eitle
(86) International application number: PCT/JP2013/051991
(87) International publication number: WO 2013/115220

(56) References cited:
- WO-A1-2011/126014
- NOKIA SIEMENS NETWORKS ET AL: "Considerations on MDT QoS verification", 3GPP DRAFT; R2-114928_MDT QOS VERIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540762, [retrieved on 2011-10-03]
- CATT: "Location Information for QoS Verification", 3GPP DRAFT; R2-115102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 2 October 2011 (2011-10-02), XP050540688, [retrieved on 2011-10-02]
- MEDIATEK: "QoS verification for MDT", 3GPP DRAFT; R2-115360 QOS VERIFICATION FOR MDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050541040, [retrieved on 2011-10-04]
- VODAFONE ET AL: "MDT Throughput Measurement", 3GPP DRAFT; R2-115918, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 7 November 2011 (2011-11-07), XP050564172, [retrieved on 2011-11-07]
- VODAFONE: "Measurement Period for QoS Verification Related Measurements", 3GPP DRAFT; R2-120453_MEASUREMENT PERIOD FOR QOS VERIFICATION MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 30 January 2012 (2012-01-30), XP050565169, [retrieved on 2012-01-30]
- NTT DOCOMO ET AL: "Location Information for QoS Measurements", 3GPP DRAFT; R2-120356_LOCATIONINFOFORQOSMEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565377, [retrieved on 2012-01-31]
- KYOCERA: 'QoS measurement and location association for MDT' 3GPP TSG-RAN WG2 #76 R2- 115949 14 November 2011, pages 1 - 3, XP050564368
- NTT DOCOMO, INC.: 'Validity time of location information for Immediate MDT' 3GPP TSG- RAN2#72BIS R2-110281 17 January 2011, pages 1 - 5, XP050474701

## Description

### [Technical Field]

The present invention relates to a mobile communication method and a radio base station.

### [Background Art]

An LTE (Long Term Evolution) scheme defines a technique called "MDT (Minimisation of Drive Tests, a measurement drive test)" that reduces labor or cost incurred through a drive test performed by a communication provider, by collecting a measurement result of predetermined radio quality in a real environment from a mobile station UE.

In MDT defined in an LTE Release-10 scheme, a radio base station eNB is configured to report, to an operation and maintenance (OAM) server, a radio quality measurement result (RSRP: Reference Signal Received Power, RSRQ: Reference Signal Received Quality) or location information of a mobile station UE, which was reported by the mobile station UE.

The 3GPP contribution R2-114928 relates to MDT QoS verification. Targets for the QoS verification are UE specific QoS measurements to verify performance relevant to end user perception and Location information to do a QoS benchmarking geographical map. L2 measurements include cell and QCI specific measurements as well as some UE specific measurements that could be relevant for QoS verification, e.g. DL/UL scheduled IP throughput per QCI per UE.

The 3GPP contribution R2-115102 relates to location information for QoS Verification. If measurement reporting is triggered within a "validity time" after the detail location information was obtained, the UE could include the detail location information only once in the reporting. It is described to associate the QoS measurement result with the location information. The association could be performed either in the eNB or in the UE. The eNB could configure the UE to report the location information in specific time, and then the association is implemented in the eNB.

### [Citation List]

### [Non Patent Literature]

[NPL 1] 3GPP 37.320
[NPL 2] 3GPP 36.331

### [Summary of Invention]

On the other hand, in MDT defined in an LTE Release-11 scheme, the radio base station eNB is configured to report location information of the mobile station UE reported by the mobile station UE or a QoS (Quality of Service) measurement result (throughput, CQI: Channel Quality Indicator) measured by the radio base station eNB itself, to the operation and maintenance server OAM.

In this case, the radio base station eNB needs to report, to the operation and maintenance server OAM, the location information of the mobile station UE and the QoS measurement result in an associated manner.

However, since it is probable that an acquisition time of the location information of the mobile station UE, which was reported by the mobile station UE, is different from a measurement time of the QoS measurement result measured by the radio base station eNB, there is a problem that the radio base station eNB is not able to exactly associate the location information of the mobile station UE and the QoS measurement result.

Therefore, the present invention has been achieved in view of the above-described problem, and an object thereof is to provide a mobile communication method in which, in MDT, a radio base station eNB is able to report, to an operation and maintenance server OAM, location information of a mobile station UE and a QoS measurement result in an exactly associated manner, and to provide a radio base station.

This object is accomplished by the subject-matter of the independent claims. The dependent claims describe advantageous embodiments. A first characteristic of the present invention is summarized in that a mobile communication method includes: a step of measuring, by a radio base station, throughput in an active period during which downlink data addressed to a mobile station is generated; a step of measuring, by the mobile station, predetermined radio quality in response to measurement configuration information received from the radio base station; a step of reporting, by the mobile station, the measurement result and location information of the mobile station, to the radio base station; and a step of recording (logging), by the radio base station, the location information of the mobile station in addition to the throughput in the active period and the measurement result when the location information of the mobile station is received during the active period, and reporting the throughput, the measurement result, and the location information of the mobile station to a predetermined server at a predetermined timing.

A second characteristic of the present invention is summarized in that a radio base station includes: a measurement unit configured to measure throughput in an active period during which downlink data addressed to a mobile station is generated; a reception unit configured to receive, from the mobile station, a measurement result of predetermined radio quality and location information of the mobile station; and a transmission unit configured to record (log) the location information of the mobile station in addition to the throughput in the active period and the measurement result when the location information of the mobile station is received during the active period, and to report the throughput, the measurement result, and the location information of the mobile station to a predetermined server at a predetermined timing.

### [Brief Description of Drawings]

[Fig. 1] Fig. 1 is an entire configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present invention.
[Fig. 4] Fig. 4 is a diagram for explaining an operation of the mobile communication system according to the first embodiment of the present invention.
[Fig. 5] Fig. 5 is a diagram for explaining an operation of a mobile communication system according to a first modification of the present invention.

### [Description of Embodiments]

### (Mobile communication system according to first embodiment of the present invention)

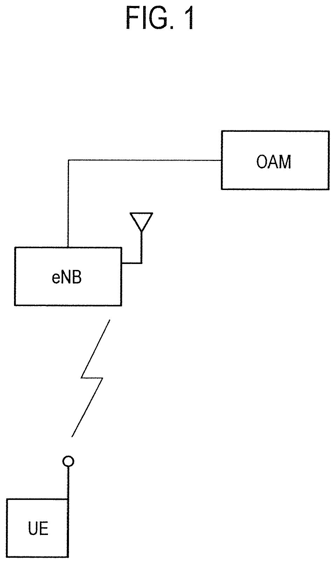

With reference to Fig. 1 through Fig. 4, a mobile communication system according to a first embodiment of the present invention will be described.

As illustrated in Fig. 1, the mobile communication system according to the present embodiment includes an operation and maintenance server OAM and a radio base station eNB. In addition, in the mobile communication system according to the present embodiment, it is possible to perform MDT defined in an LTE Release-11 scheme.

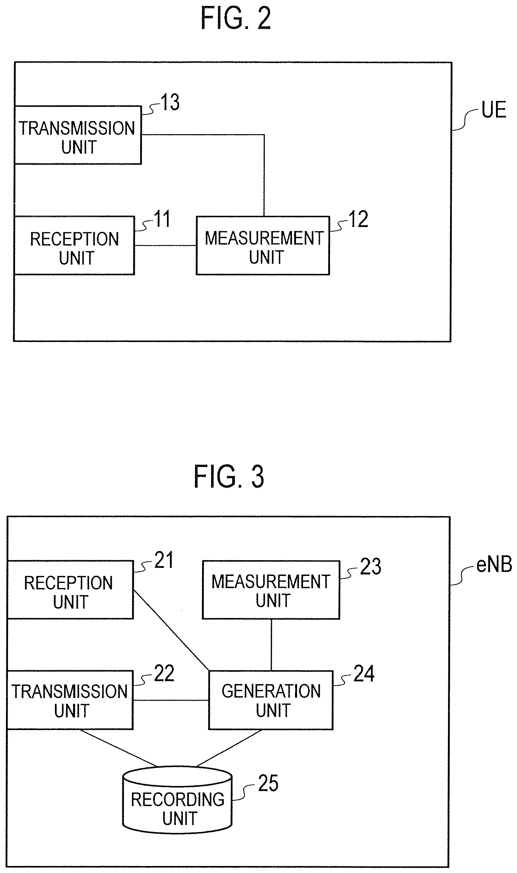

As illustrated in Fig. 2, a mobile station UE according to the present embodiment includes a reception unit 11, a measurement unit 12, and a transmission unit 13.

The reception unit 11 is configured to receive various signals that are transmitted by the radio base station eNB.

For example, the reception unit 11 may be configured to receive "Measurement Configuration", which indicates the measurement of predetermined radio quality for MDT, from the radio base station eNB.

The measurement unit 12 is configured to measure the predetermined radio quality for MDT in response to the "Measurement Configuration" received by the reception unit 11.

Furthermore, the measurement unit 12 is configured to acquire "Location Information" that is location information of the mobile station UE.

Furthermore, for the MDT, the measurement unit 12 may be configured to acquire the "Location Information" by using positioning means such as GPS, LCS, or SUPL.

Alternatively, in the case of using another location information service, the measurement unit 12 may be configured to divert the location information of the mobile station UE, which was acquired in the location information service, to the "Location Information".

The transmission unit 13 is configured to transmit "Measurement Report", which includes "MDT Measurement" that is a measurement result of the predetermined radio quality for MDT, to the radio base station eNB.

Furthermore, the transmission unit 13 may be configured to allow the "Location Information" acquired by the measurement unit 12 to be included in the "Measurement Report".

Alternatively, separately from the "Measurement Report", the transmission unit 13 may be configured to transmit the "Location Information" acquired by the measurement unit 12.

For example, when it is designated that "Immediate MDT" is performed as the MDT, the transmission unit 13 may also be configured to repeatedly transmit the "Measurement Report" in each "Measurement Interval" designated by the "Measurement Configuration".

As illustrated in Fig. 3, the radio base station eNB according to the present embodiment includes a reception unit 21, a transmission unit 22, a measurement unit 23, a generation unit 24, and a recording unit 25.

The reception unit 21 is configured to receive various signals that are transmitted by the mobile station UE or the operation and maintenance server OAM.

For example, the reception unit 21 may be configured to receive the "Measurement Report" including the "MDT Measurement" from the mobile station UE.

Furthermore, the reception unit 21 may be configured to receive the "Location Information", separately from the "Measurement Report" from the mobile station UE.

Furthermore, the reception unit 21 may be configured to receive an indication signal, which designates a measurement item for the MDT, from the operation and maintenance server OAM.

The transmission unit 22 is configured to transmit various signals to the mobile station UE or the operation and maintenance server OAM.

For example, the transmission unit 22 may be configured to transmit the "Measurement Configuration", which indicates the measurement of the predetermined radio quality for MDT, to the mobile station UE.

Furthermore, the transmission unit 22 may also be configured to allow "Indication", which indicates the acquisition of the "Location Information", to be included in the "Measurement Configuration".

Furthermore, the transmission unit 22 may also be configured to allow "Indication", which designates an acquisition method of the "Location Information", to be included in the "Measurement Configuration".

Furthermore, as will be described later, the transmission unit 22 is configured to transmit "MDT QoS Measurement Report", which has been generated by the generation unit 24 and recorded on the recording unit 25, to the operation and maintenance server OAM.

Furthermore, the transmission unit 22 may also be configured to transmit the "MDT QoS Measurement Report" at a timing designated by the operation and maintenance server OAM.

Furthermore, the transmission unit 22 may also be configured to transmit, to the operation and maintenance server OAM, one "MDT QoS Measurement Report" each time, or to collectively transmit a plurality of "MDT QoS Measurement Reports" recorded by the recording unit 25 at a predetermined timing.

For example, in relation to the predetermined timing, the following cases are considered.
- In the case of "Immediate MDT", a timing at which the mobile station UE is transitioned to an "Idle state"
- A predetermined time of every day (for example, AM 1 2: 0 0 and the like)
- A timing at which a recording medium in the radio base station eNB becomes full

The measurement unit 23 is configured to measure "DL Throughput" at an "Active Time" for which downlink data addressed to the mobile station UE is generated.

Specifically, the measurement unit 23 may be configured to use the data amount of downlink data transmitted during the "Active Time" as the "DL Throughput". Furthermore, the measurement unit 23 may also be configured to use a time period, for which downlink data is actually stored in a transmission buffer, as the "Active Time".

The generation unit 24 is configured to generate the "MDT QoS Measurement Report" to be transmitted to the operation and maintenance server OAM.

Specifically, when the reception unit 21 received the "Location Information" during the "Active Time", the generation unit 24 may be configured to allow the "Location Information", in addition to the "DL Throughput" at the "Active Time" and the "MDT Measurement" included in the "Measurement Report", to be included in the "MDT QoS Measurement Report" to be transmitted to the operation and maintenance server OAM.

The recording unit 25 is configured to record (log) the "MDT QoS Measurement Report" that associates "DL Throughput", the "MDT Measurement" and the "Location Information".

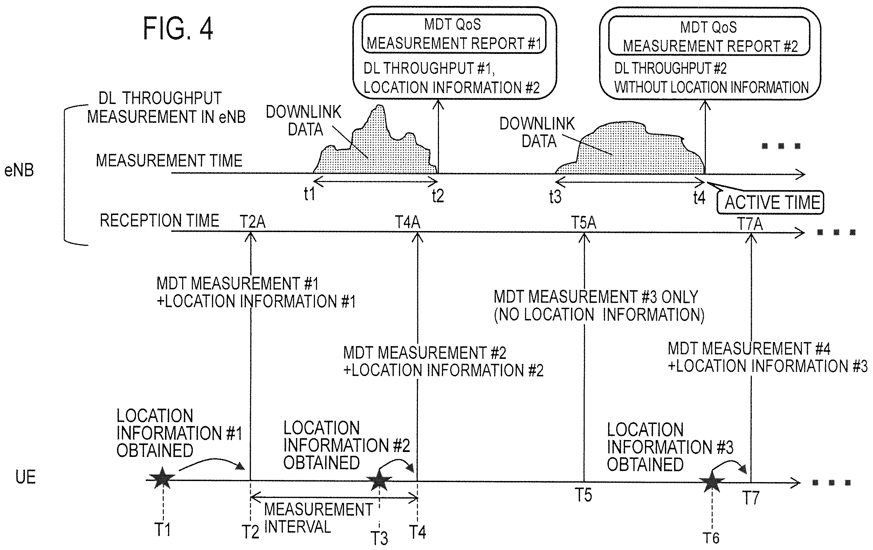

Hereinafter, with reference to Fig. 4, an example of the operation of the mobile communication system according to the first embodiment of the present invention will be described.

As illustrated in Fig. 4, the mobile station UE acquires "Location Information #1" at a time T1, and reports "MDT Measurement #1" and the "Location Information #1" to the radio base station eNB at a time T2.

The radio base station eNB receives the "MDT Measurement #1" and the "Location Information #1" at a time T2A. However, the radio base station eNB determines that the current time is not during the "Active Time", and does not transmit the "MDT QoS Measurement Report" including the "Location Information #1" to the operation and maintenance server OAM.

Furthermore, the radio base station eNB may record (log) the "MDT Measurement #1" and the "Location Information #1".

However, in this case, the radio base station eNB does not record the "MDT QoS Measurement Report".

Then, the mobile station UE acquires "Location Information #2" at a time T3, and reports "MDT Measurement #2" and the "Location Information #2" to the radio base station eNB at a time T4.

The radio base station eNB receives the "MDT Measurement #2" and the "Location Information #2" at a time T4A.

Furthermore, the radio base station eNB stores the "Location Information #2", which was received during the "Active Time (t1-t2)", as the latest "Location Information" corresponding to the "Active Time (t1-t2)".

Then, when another "Location Information" was received during the "Active Time (t1-t2)", the radio base station eNB updates the latest "Location Information" corresponding to the "Active Time (t1-t2)".

When it is detected that the "Active Time (t1-t2)" was completed (that is, the transmission buffer became empty) at a time t2, the radio base station eNB transmits "MDT QoS Measurement Report #1" including the "Location Information #2" to the operation and maintenance server OAM as the latest "Location Information" corresponding to the "Active Time (t1-t2)", in addition to "DL throughput #1" at the "Active Time (t1-t2)" and the "MDT Measurement #2".

In this case, the radio base station eNB may record the "MDT QoS Measurement Report #1", and transmit the "MDT QoS Measurement Report #1" to the operation and maintenance server OAM at a predetermined timing.

Then, at the time T5, the mobile station UE reports only "MDT Measurement #3" to the radio base station eNB without reporting the "Location Information".

At a time T5A, the radio base station eNB receives the "MDT Measurement #3". Furthermore, since the radio base station eNB determines that the current time is during the "Active Time (t3-t4)" but receives no "Location Information", the radio base station eNB does not store the latest "Location Information" corresponding to the "Active Time (t3-t4)".

When it is detected that the "Active Time (t3-t4)" was completed (that is, the transmission buffer became empty) at a time t4, the radio base station eNB transmits "MDT QoS Measurement Report #2" including "DL throughput #2" at the "Active Time (t1-t2)" and the "MDT Measurement #3" to the operation and maintenance server OAM.

Furthermore, since the radio base station eNB does not store the latest "Location Information" corresponding to the "Active Time (t3-t4)", the radio base station eNB does not allow the latest "Location Information" corresponding to the "Active Time (t3-t4)" to be included in the "MDT QoS Measurement Report #1".

In this case, the radio base station eNB may record the "MDT Measurement #3" without associating the "MDT Measurement #3" with the "Location Information".

Then, the mobile station UE acquires "Location Information #3" at the time T6, and reports "MDT Measurement #4" and the "Location Information #3" to the radio base station eNB at the time T7.

The radio base station eNB receives the "MDT Measurement #4" and the "Location Information #3" at a time T7A. However, the radio base station eNB determines that the current time is not during the "Active Time", and does not transmit the "MDT QoS Measurement Report" including the "Location Information #3" to the operation and maintenance server OAM.

In accordance with the invention according to the present embodiment, the radio base station eNB is configured to report, to the operation and maintenance server OAM, only the "Location Information" received during the "Active Time" in such a manner that the "Location Information" received during the "Active Time" is associated with the "DL throughput" at the "Active Time", so that it is possible to minimize a difference between an acquisition time of the location information of the mobile station UE, which was reported by the mobile station UE, and a measurement time of the QoS measurement result measured by the radio base station eNB.

### (First Modification)

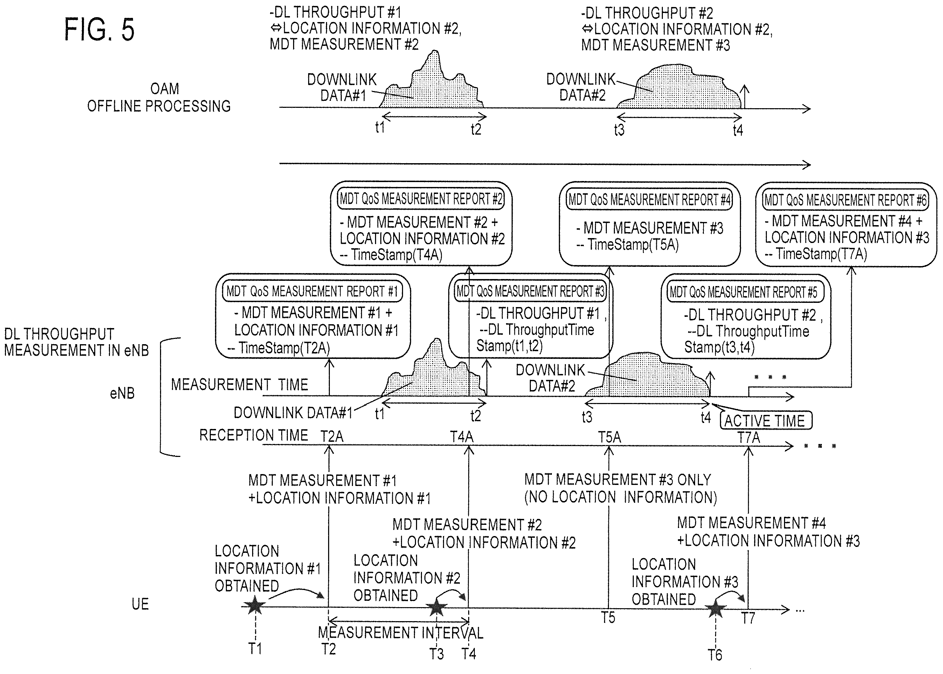

With reference to Fig. 5, a mobile communication system according to a first modification of the present invention will be described. The following is a description of the mobile communication system according to the first modification while focusing on the difference from the mobile communication system according to the first embodiment described above.

Hereinafter, with reference to Fig. 5, an example of the operation of the mobile communication system according to the first modification of the present invention will be described.

As illustrated in Fig. 5, the mobile station UE acquires the "Location Information #1" at the time T1, and reports the "MDT Measurement #1" and the "Location Information #1" to the radio base station eNB at the time T2.

When the "MDT Measurement #1" and the "Location Information #1" are received at the time T2A, the radio base station eNB adds "TimeStamp (T2A)" to the "MDT Measurement #1" and the "Location Information #1", thereby transmitting the added result as the "MDT QoS Measurement Report #1" to the operation and maintenance server OAM.

Then, the mobile station UE acquires "Location Information #2" at a time T3, and reports "MDT Measurement #2" and the "Location Information #2" to the radio base station eNB at a time T4.

When the "MDT Measurement #2" and the "Location Information #2" are received at the time T4A, the radio base station eNB adds "TimeStamp (T4A)" to the "MDT Measurement #2" and the "Location Information #2", thereby transmitting the added result as the "MDT QoS Measurement Report #2" to the operation and maintenance server OAM.

When it is detected that the "Active Time (t1-t2)" was completed (that is, the transmission buffer became empty) at the time t2, that is, when the measurement of the "DL throughput #1" is completed, the radio base station eNB adds "DL ThroughputTimeStamp (t1 and t2)" to the "DL throughput #1", thereby transmitting the added result as the "MDT QoS Measurement Report #3" to the operation and maintenance server OAM.

Furthermore, the radio base station eNB sets the measurement start time t1 and the measurement end time t2 of the "DL throughput #1" in the "DL ThroughputTimeStamp".

In addition, the radio base station eNB may separately transmit the "MDT QoS Measurement Report #1" to the "MDT QoS Measurement Report #3" to the operation and maintenance server OAM, or may collectively transmit the "MDT QoS Measurement Report #1" to the "MDT QoS Measurement Report #3" to the operation and maintenance server OAM.

On the basis of the "TimeStamp (DL ThroughputTimeStamp)" added to the received "MDT QoS Measurement Report #1" to "MDT QoS Measurement Report #3", the operation and maintenance server OAM records the "DL throughput #1", the "Location Information #2", and the "MDT Measurement #2" in an associated manner.

Then, at the time T5, the mobile station UE reports only "MDT Measurement #3" to the radio base station eNB without reporting the "Location Information".

When the "MDT Measurement #3" is received at the time T5A, the radio base station eNB adds "TimeStamp (T5A)" to the "MDT Measurement #3", thereby transmitting the added result as "MDT QoS Measurement Report #4" to the operation and maintenance server OAM.

When it is detected that the "Active Time (t3-t4)" was completed (that is, the transmission buffer became empty) at the time t4, that is, when the measurement of the "DL throughput #2" is completed, the radio base station eNB adds "DL ThroughputTimeStamp (t3 and t4)" to the "DL throughput #2", thereby transmitting the added result as "MDT QoS Measurement Report #5" to the operation and maintenance server OAM.

Furthermore, the radio base station eNB sets the measurement start time t3 and the measurement end time t4 of the "DL throughput #2" in the "DL ThroughputTimeStamp".

Then, the mobile station UE acquires "Location Information #3" at the time T6, and reports "MDT Measurement #4" and the "Location Information #3" to the radio base station eNB at the time T7.

When the "MDT Measurement #4" and the "Location Information #3" are received at the time T7A, the radio base station eNB adds "TimeStamp (T7A)" to the "MDT Measurement #4" and the "Location Information #3", thereby transmitting the added result as "MDT QoS Measurement Report #6" to the operation and maintenance server OAM.

In addition, the radio base station eNB may separately transmit the "MDT QoS Measurement Report #4" to the "MDT QoS Measurement Report #6" to the operation and maintenance server OAM, or may collectively transmit the "MDT QoS Measurement Report #4" to the "MDT QoS Measurement Report #6" to the operation and maintenance server OAM.

On the basis of the "TimeStamp (DL ThroughputTimeStamp)" added to the received "MDT QoS Measurement Report #4" to "MDT QoS Measurement Report #6", the operation and maintenance server OAM records the "DL throughput #2", the "Location Information #2", and the "MDT Measurement #3" in an associated manner.

The characteristics of the present embodiment as described above may be expressed as follows.

A first characteristic of the present embodiment is summarized in that a mobile communication method includes: a step of measuring, by a radio base station eNB, "DL Throughput (throughput)" at an "Active Time (an active period)" during which downlink data addressed to a mobile station UE is generated; a step of measuring, by the mobile station UE, predetermined radio quality in response to "Measurement Configuration (measurement configuration information)" received from the radio base station eNB; a step of reporting, by the mobile station UE, "MDT Measurement (a measurement result)" and "Location Information (location information of the mobile station)", to the radio base station eNB; and a step of recording (logging), by the radio base station eNB, the "Location Information" in addition to the "DL Throughput" at the "Active Time" and the "MDT Measurement" when the "Location Information" is received during the "Active Time", and reporting the "DL Throughput", the "MDT Measurement", and the "Location Information" to an operation and maintenance server OAM (a predetermined server) at a predetermined timing.

A second characteristic of the present embodiment is summarized in that a radio base station eNB includes: a measurement unit 23 configured to measure "DL Throughput" at an "Active Time" for which downlink data addressed to a mobile station UE is generated; a reception unit 21 configured to receive "MDT Measurement" and "Location Information" from the mobile station UE; and a transmission unit 22 configured to record (log) the "Location Information" in addition to the "DL Throughput" at the "Active Time" and the "MDT Measurement" when the "Location Information" is received during the "Active Time", and to report the "DL Throughput", the "MDT Measurement", and the "Location Information" to an operation and maintenance server OAM (a predetermined server) at a predetermined timing.

Note that the operation of the above-described mobile station UE, radio base station eNB, or operation and maintenance server OAM may be performed by hardware, a software module performed by a processor, or a combination thereof.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile station UE, the radio base station eNB, or the operation and maintenance server OAM. Furthermore, such a storage medium and processor may be arranged in the mobile station UE, the radio base station eNB, or the operation and maintenance server OAM as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the scope of the present invention defined by the claims. Therefore, the description of the specification is intended for explaining the example only and does not impose any limited meaning to the present invention.

### [Industrial Applicability]

As described above, according to the present invention, it is possible to provide a mobile communication method in which, in MDT, a radio base station eNB is able to report, to an operation and maintenance server OAM, location information of a mobile station UE and a QoS measurement result in an exactly associated manner, and to provide a radio base station.

### [Explanation of Numerals]

- UE ...: Mobile station
- eNB ...: Radio base station
- OAM ...: Operation and maintenance server
- 11, 21 ...: Reception unit
- 12, 23 ...: Measurement unit
- 13, 22 ...: Transmission unit
- 24 ...: Generation unit

## Claims

1. A mobile communication method comprising:
a step of measuring, by a radio base station, throughput in an active period during which downlink data addressed to a mobile station is generated;
a step of measuring, by the mobile station, predetermined radio quality in response to measurement configuration information received from the radio base station;
a step of reporting, by the mobile station, the measurement result and location information of the mobile station, to the radio base station; and
a step of recording, by the radio base station, the location information of the mobile station in addition to the throughput in the active period and the measurement result and associating, by the radio base station, the location information of the mobile station with the throughput in the active period and the measurement result, when the location information of the mobile station is received during the active period.

2. The mobile communication method according to claim 1, wherein the radio base station reports the throughput, the measurement result, and the location information of the mobile station, to a predetermined server.

3. A radio base station comprising:
a measurement unit (23) configured to measure throughput in an active period during which downlink data addressed to a mobile station is generated;
a reception unit (21) configured to receive, from the mobile station, a measurement result of predetermined radio quality and location information of the mobile station; and
a recording unit (25) configured to record the location information of the mobile station in addition to the throughput in the active period and the measurement result and associate the location information of the mobile station with the throughput in the active period and the measurement result, when the location information of the mobile station is received during the active period.

4. The radio base station according to claim 3, further comprising a transmission unit configured to report the throughput, the measurement result, and the location information of the mobile station to a predetermined server.

## Patentansprüche

1. Mobilkommunikationsverfahren umfassend:
einen Schritt des Messens, durch eine Funkbasisstation, eines Durchsatzes in einer aktiven Periode, während der Downlinkdaten, die an eine Mobilstation adressiert sind, erzeugt werden;
einen Schritt des Messens, durch die Mobilstation, einer vorgegebenen Funkqualität als Antwort auf die von der Funkbasisstation erhaltene Messkonfigurationsinformation;
einen Schritt des Berichtens, durch die Mobilstation, des Messergebnisses und einer Ortsinformation der Mobilstation zur Funkbasisstation; und
einen Schritt des Aufzeichnens, durch die Funkbasisstation, der Ortsinformation der Mobilstation zusätzlich zu dem Durchsatz in der aktiven Periode und dem Messergebnis und In-Verbindung-Bringen, durch die Funkbasisstation, der Ortsinformationen der Mobilstation mit dem Durchsatz in der aktiven Periode und des Messergebnisses, wenn die Ortsinformation der Mobilstation während der aktiven Periode empfangen wird.

2. Mobilkommunikationsverfahren nach Anspruch 1, wobei die Funkbasisstation den Durchsatz, das Messergebnis und die Ortsinformation an einen vorgegebenen Server berichtet.

3. Radiobasisstation umfassend:
eine Messeinheit (23) ausgestaltet, um den Durchsatz in einer aktiven Periode, während der Downlinkdaten, die an eine Mobilstation adressiert sind, erzeugt werden, zu messen;
eine Empfangseinheit (21) ausgestaltet, um, von der Mobilstation, ein Messergebnis einer vorgegebenen Funkqualität und eine Ortsinformation der Mobilstation zu empfangen; und
eine Aufzeichnungseinheit (25) ausgestaltet, um die Ortsinformation der Mobilstation zusätzlich zu dem Durchsatz in der aktiven Periode und dem Messergebnis aufzuzeichnen und um die Ortsinformation der Mobilstation mit dem Durchsatz in der aktiven Periode und dem Messergebnis in Verbindung zu bringen, wenn die Ortsinformation der Mobilstation während der aktiven Periode empfangen worden ist.

4. Funkbasisstation nach Anspruch 3, weiter umfassend eine Übertragungseinheit, ausgestaltet, um den Durchsatz, das Messergebnis und die Ortsinformation der Mobilstation an einen vorbestimmten Server zu berichten.

## Revendications

1. Procédé de communication mobile comprenant :
une étape de mesure, par une station de base radio, de débit dans une période active au cours de laquelle des données de liaison descendante adressées à une station mobile sont générées ;
une étape de mesure, par la station mobile, de qualité radio prédéterminée en réponse aux informations de configuration de mesure reçues à partir de la station de base radio;
une étape de rapport, par la station mobile, du résultat de mesure et d'informations d'emplacement de la station mobile, à la station de base radio ; et
une étape d'enregistrement, par la station de base radio, des informations d'emplacement de la station mobile en plus du débit dans la période active et du résultat de mesure et d'association, par la station de base radio, des informations d'emplacement de la station mobile avec le débit dans la période active et du résultat de mesure, lorsque les informations d'emplacement de la station mobile sont reçues au cours de la période active.

2. Procédé de communication mobile selon la revendication 1, dans lequel la station de base radio rapporte le débit, le résultat de mesure, et les informations d'emplacement de la station mobile, à un serveur prédéterminé.

3. Station de base radio comprenant :
une unité de mesure (23) configurée pour mesurer un débit dans une période active au cours de laquelle des données de liaison descendante adressées à une station mobile sont générées ;
une unité de réception (21) configurée pour recevoir, à partir de la station mobile, un résultat de mesure de qualité radio prédéterminée et des informations d'emplacement de la station mobile ; et
une unité d'enregistrement (25) configurée pour enregistrer les informations d'emplacement de la station mobile en plus du débit dans la période active et du résultat de mesure, et pour associer les informations d'emplacement de la station mobile avec le débit dans la période active et le résultat de mesure, lorsque les informations d'emplacement de la station mobile sont reçues au cours de la période active.

4. Station de base radio selon la revendication 3, comprenant en outre une unité de transmission configurée pour rapporter le débit, le résultat de mesure, et les informations d'emplacement de la station mobile à un serveur prédéterminé.
